# FASCICULE DE BREVET EUROPEEN

(11) **EP 3 746 765 B1**
(45) Date de publication et mention de la délivrance du brevet: **22.12.2021**
(21) Numéro de dépôt: 19700527.5
(22) Date de dépôt: 17.01.2019
(51) Int. Cl.: G01N 15/05, G01N 15/04, G01N 21/25, G01J 3/42, G01N 21/77

(54) **MÉTHODE DE DÉTERMINATION D'UNE VITESSE DE SEDIMENTATION OU DE CRÈMAGE**
VERFAHREN ZUR BESTIMMUNG DER SCHWIM- UND SENKUNGSGESCHWINDIGKEIT
METHOD FOR DETERMINING A SEDIMENTATION OR FLOTATION RATE

(30) Priorité: 02.02.2018 FR 1800110
(43) Date de publication de la demande: 09.12.2020
(73) Titulaire: Université de Rennes 1, 35065 Rennes Cedex (FR); CENTRE NATIONAL DE LA RECHERCHE SCIENTIFIQUE - CNRS -, 75794 Paris Cedex 16 (FR)
(72) Inventeur: BECHE, Bruno, 35000 Rennes (FR); LHERMITE, Hervé, 35510 Cesson Sevigne (FR); VIE, Véronique, 35200 Rennes (FR); GARNIER, Lucas, 35700 Rennes (FR)
(74) Mandataire: Cabinet Le Guen Maillet
(86) Numéro de dépôt international: PCT/EP2019/051103
(87) Numéro de publication internationale: WO 2019/149530

(56) Documents cités:
- JP-A- 2001 046 360
- US-A1- 2004 065 143

## Description

### 1. Domaine de l'invention.

La présente invention concerne une méthode de détermination d'une vitesse de sédimentation ou de crémage. L'invention concerne plus particulièrement une mesure de vitesse de sédimentation ou de crémage par caractérisation photonique.

### 2. Etat de l'art.

La sédimentation caractérise un positionnement progressif de particules de matière en couches selon des facteurs variés en nombre et en proportion. Les déplacements de particules ou d'éléments influent beaucoup sur la vitesse de sédimentation et la mécanique des fluides a globalement un rôle important dans le processus de sédimentation. La viscosité d'un milieu et la granulométrie des particules ont également une incidence forte sur la vitesse de sédimentation. Les mêmes considérations sont applicables au crémage par la mesure des remontées des éléments de type gouttelettes, en suspension cette fois-ci.

Sédimentation et crémage sont en effet deux phénomènes 'analogues'. Dans un cas, les "particules" qui sont dans le liquide ont une masse volumique supérieure à celle du liquide, dans l'autre cas une masse volumique inferieure. Autrement dit, dans un cas, les particules (ou éléments) descendent sous l'action majoritaire de la pesanteur (sédimentation), et, dans l'autre cas, elles remontent sous l'action majoritaire de la poussée d'Archimède(crémage).

Par exemple, dans le domaine de la santé, la vitesse de sédimentation définit le phénomène de sédimentation du sang, soit le mécanisme de descente de globules rouges en suspension. Ce paramètre est connu pour refléter la présence d'un syndrome inflammatoire, tel que la présence de rhumatismes, une artérite, un syndrome infectieux par exemple. En effet, en présence d'une inflammation, les globules rouges se collent et leur vitesse de descente s'accélère alors. Une mesure rapide de la vitesse de sédimentation peut donc s'avérer très utile, notamment dans le cas d'un test médical d'orientation.

Des solutions existent pour mesurer la vitesse de sédimentation ou de crémage. Ces solutions mettent en œuvre soit une mesure de variation de l'intensité de la lumière ou de rayons X traversant une suspension, soit une détermination de masse à l'aide d'un dispositif à ondes acoustiques (technologie à couche mince piézoélectrique).

La détermination d'une vitesse de sédimentation ou de crémage selon l'état de l'art n'est toutefois pas très rapide et la précision d'une mesure sur un intervalle de temps donné peut être améliorée.

US 2004/065143 A1 décrit un appareil qui détermine la vitesse de sédimentation en utilisant des signaux acoustiques.

JP 2001 046360 A décrit une méthode de détermination d'une vitesse de sédimentation d'un mélange en suspension en utilisant des signaux optiques, mais ne fait pas allusion à un micro-résonateur.

### 3. Résumé de l'invention.

L'invention permet d'améliorer au moins certains des inconvénients de l'art antérieur en proposant une méthode de détermination d'une vitesse de sédimentation ou de crémage d'un mélange en suspension, comprenant une application d'un échantillon du mélange en suspension sur un micro-résonateur photonique, une émission d'un premier signal optique en entrée du micro-résonateur photonique portant l'échantillon du mélange en suspension, une acquisition et un enregistrement d'un second signal optique, délivré en sortie du micro-résonateur portant l'échantillon du mélange en suspension, et une détermination d'une information représentative d'une vitesse de sédimentation ou de crémage du mélange en suspension à partir du second signal optique enregistré, par itérations successives d'analyse spectrale du second signal optique.

Avantageusement, la dynamique d'évolution du second signal optique analysé est représentative de l'accroissement progressif, sous l'effet de la gravité, d'une couche de particules contenues dans l'échantillon. Le temps de constitution d'une couche d'une épaisseur prédéterminée est représentatif de la vitesse de sédimentation ou de crémage du mélange en suspension.

Avantageusement, une comparaison du second signal optique quantifié résonnant dans le micro-résonateur et du premier signal optique opérant ainsi comme une référence, permet l'identification de pics de pureté spectrale dont l'amplitude, le positionnement et les variations permettent de définir dans un intervalle de temps réduit une information représentative de la vitesse de sédimentation ou de crémage sous gravité de l'échantillon du mélange en suspension positionné sur le micro-résonateur, pour une viscosité donnée.

La méthode selon l'invention utilise astucieusement une mesure de variation des couleurs, des intensités et des puretés spectrales de chaque couleur (ou composante spectrale) d'un signal optique modifié dans le micro-résonateur par la présence et la nature de l'échantillon en cours de sédimentation ou de crémage (et donc en fonction du temps), disposé sur le micro-résonateur opérant un phénomène de contre-propagation cyclique avec résonnance.

Selon un mode de réalisation de l'invention, le premier signal optique est généré à partie d'une source de lumière de référence comprenant une composante spectrale unique, tel que, à titre d'exemple, un laser à spectre large ou accordable.

Selon une variante du mode de réalisation, le premier signal optique comprend une pluralité de composantes spectrales réunies dans un même premier signal optique, de sorte que chacune de ces composantes sera transformée en un peigne de couleurs par le micro-résonateur et visible en sortie du micro-résonateur.

Selon un mode de réalisation de l'invention, ledit micro-résonateur optique est un nano-résonateur à structure composite comprenant une résine polymère définissant une cavité en forme d'anneau (forme circulaire, elliptique ou ovale, à titre d'exemples non-limitatifs, en deux dimensions planaires), usiné par un procédé de micro-technologie.

Avantageusement, la cavité ainsi réalisée opère comme une sonde de lumière résonnante au niveau spectral, qui créée alors un peigne de couleurs (une pluralité de composantes de couleurs) et permet, après réception et analyse du second signal optique ainsi modifié et délivré en sortie du micro-résonateur, de comparer composante par composante, astucieusement et selon l'invention, à la fois des variations de couleur, d'intensité de couleur et de pureté spectrale de couleur du second signal optique délivré par le micro-résonateur, en fonction du temps, et donc en mode de suivi dynamique de croissance de couche de particules dans le mélange en suspension.

Avantageusement, ce type de résonateur amène une résolution élevée d'analyse du second signal optique, délivré en sortie du micro-résonateur, lors d'une croissance en épaisseur de couche (sédimentation ou crémage) dès les premiers 200 nm d'épaisseur. En d'autres termes, la combinaison astucieuse de l'utilisation d'un micro-résonateur et l'analyse dynamique dans le temps, avec des itérations de calcul sur des périodes ayant chacune une durée de l'ordre de la seconde (entre 0,5 seconde et 2 secondes), permet d'obtenir très rapidement une information représentative d'une vitesse de sédimentation ou de crémage d'un échantillon. L'accumulation d'une couche en cours de dépôt peut être détectée ainsi très rapidement par rapport aux techniques connues. Les techniques selon l'art antérieur ne permettent pas d'obtenir une information représentative d'une vitesse de sédimentation ou de crémage au bout de quelques minutes, comme c'est le cas par la méthode mise en œuvre selon l'invention.

L'invention concerne également un dispositif mettant en œuvre la méthode précitée et qui comprend un micro-résonateur (ou nano-résonateur) photonique configuré pour recevoir un échantillon d'un mélange en suspension en cours de sédimentation ou de crémage (et donc de croissance de couche), un émetteur d'un premier signal optique orienté (appliqué) en entrée du micro-résonateur photonique, un module d'acquisition et d'enregistrement d'un second signal, délivré en sortie du micro-résonateur portant l'échantillon du mélange en suspension, et un module de détermination d'au moins une information représentative d'une vitesse de sédimentation ou de crémage du mélange en suspension à partir du second signal optique enregistré, par itérations successives d'analyse spectrale du second signal optique.

L'utilisation d'un micro-résonateur, combiné aux autres éléments de la chaine de traitement du signal décrite ci-avant et à laquelle il s'intègre, permet de détecter un épaississement progressif d'une couche de particules en suspension, dès le début, sous l'effet de la gravité, dans l'échantillon placé sur le micro-résonateur, et d'en déduire une vitesse de sédimentation ou de crémage du mélange en suspension par analyse spectrale du signal disponible en sortie du micro-résonateur.

Selon un mode de réalisation de l'invention, le module d'acquisition et d'enregistrement du signal disponible en sortie du micro-résonateur comprend un capteur optique, de type CCD (« Charge Coupled Device ») par exemple, et un module d'échantillonnage et d'enregistrement numérique ainsi qu'un analyseur spectral.

Avantageusement, la méthode précitée mise en œuvre dans le dispositif selon l'invention permet de mesurer dynamiquement et dans un temps réduit la vitesse de sédimentation du plasma sanguin lorsque l'échantillon d'un mélange en suspension est une goutte ou une gouttelette de sang.

La méthode décrite est toutefois opérante pour une mesure de sédimentation ou de crémage (croissance d'épaisseur de couche) dans tout type de mélange en suspension.

### 4. Liste des figures.

L'invention sera mieux comprise, et d'autres particularités et avantages apparaîtront à la lecture de la description qui va suivre, la description faisant référence aux dessins annexés parmi lesquels :
- la **figure 1** est un diagramme représentant des étapes essentielles de la méthode selon l'invention.
- la **figure 2** représente un système configuré pour mettre en œuvre la méthode, selon un mode particulier et non-limitatif de l'invention.
- la **figure 3** représente un micro-résonateur photonique agencé pour une mesure de vitesse de sédimentation ou de crémage selon la méthode mise en œuvre dans le système de la figure 2.

### 5. Description détaillée de modes de réalisation de l'invention.

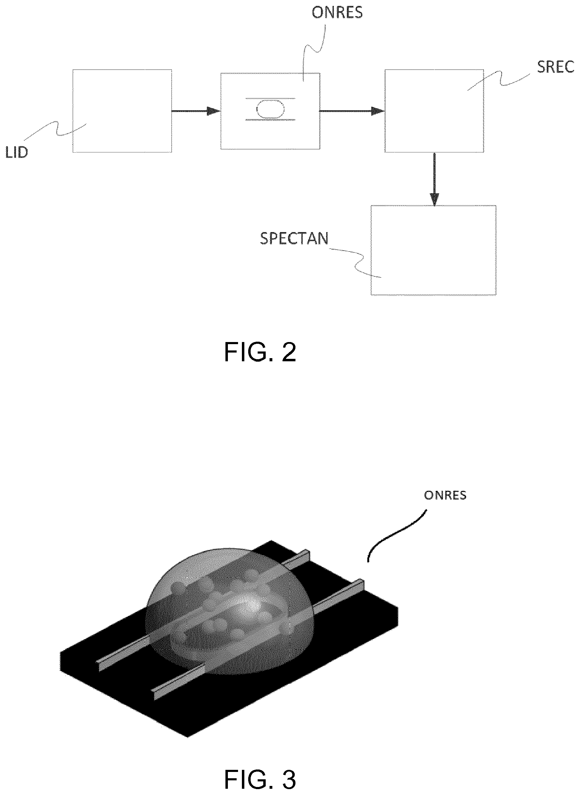

Sur les **figures 2 et 3****,** les modules représentés sont des unités fonctionnelles, qui correspondent ou non à des unités physiquement distinguables. Par exemple, ces modules ou certains d'entre eux sont regroupés dans un unique composant, ou constitués des fonctionnalités d'un même logiciel. *A contrario,* selon d'autres modes de réalisation, certains modules sont composés d'entités physiques séparées.

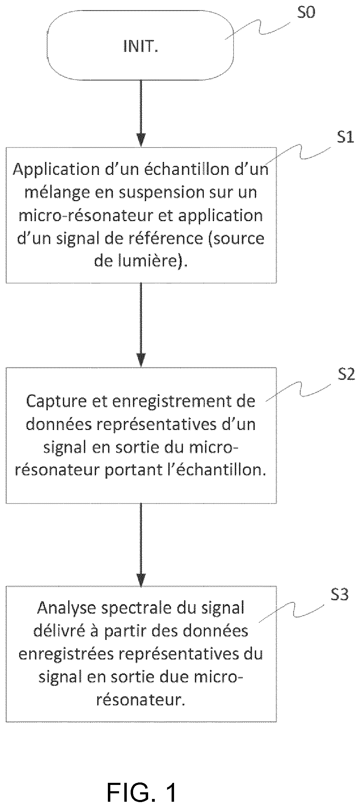

La **figure 1** est un diagramme représentant des étapes essentielles de la méthode selon l'invention.

L'étape **S0** constitue une étape initiale lors de laquelle une source de lumière de référence LID de type laser est configurée pour émettre un premier signal optique OSIG1 (signal dit de référence) en entrée d'un micro-résonateur ONRES. Le micro résonateur ONRES est de type à couplage latéral et est développé, par exemple, selon un procédé lithographique, dans un polymère de type UV210, en utilisant un rayonnement UV (Ultra-Violet) pour définir des motifs submicrométriques. La premier signal optique OSIG1 émis par la source de lumière LID est alors modifié en un peigne de couleurs dans le micro-résonateur qui inhibe la présence de certaines composantes de couleur.

L'application du premier signal optique OSIG1 au micro-résonateur ONRES utilise des moyens usuels tels que, éventuellement, de la fibre optique, un concentrateur, un ou plusieurs polariseurs, l'ensemble de ces éléments étant disposés et alignés de sorte à pouvoir insérer le signal optique dans une branche d'entrée du micro-résonateur ONRES. Lors de cette étape initiale sont également configurés des éléments optiques adaptés à capter un second signal optique OSIG2 à partir d'une branche de sortie du micro-résonateur ONRES. Selon un mode de réalisation de l'invention, un ensemble de lentilles optiques permet la transmission du second signal optique OSIG2 variant en fonction du temps, entre la sortie du micro résonateur ONRES et un micro-capteur de type CCD, de haute-définition, relié à un module d'acquisition et d'enregistrement SREC. Le module SREC comprend éventuellement (et selon la nature des signaux de sortie du capteur de type CCD) un échantillonneur analogique / numérique rapide configuré pour délivrer un train de données numériques représentatives du second signal optique OSIG2, variable, délivré en sortie du micro-résonateur ONRES.

Le dispositif d'acquisition et d'enregistrement est opérationnel et comprend l'ensemble des éléments classiquement utilisés pour la mise en œuvre d'un traitement numérique du signal, à savoir un ou plusieurs microcontrôleurs, des mémoires non-volatiles pour stocker du code exécutable par le ou les microcontrôleurs, un ou plusieurs modules de mémoire vive utiles au stockage de paramètres fonctionnels et des données représentatives du second signal optique OSIG2 numérisé, des circuits d'alimentation en énergie, un ou plusieurs circuits de remise à zéro, un ou plusieurs circuits d'horloge, cette liste n'étant pas exhaustive. Les différents éléments d'architecture optique du système selon l'invention ne sont pas décrits plus en détails dans la mesure où ces derniers sont classiques et ne sont pas utiles en tant que tels à la compréhension de l'invention.

Toujours à cette étape d'initialisation, préalable à une détermination d'une vitesse de sédimentation ou de crémage d'un mélange en suspension, un module SPECTAN d'analyse de spectre, connecté au module d'acquisition et d'enregistrement SREC, est configuré pour opérer des opérations de transformation d'un domaine fréquentiel du second signal optique OSIG2 à un domaine spectral de ce même signal. A cet effet, le module d'analyse de spectre SPECTAN comprend un calculateur interne, couplé à une unité de contrôle, configuré pour traiter les données représentatives du second signal optique OSIG2, préalablement enregistrées par le module SREC. Le module est apte à opérer une telle transformation par la mise en œuvre d'une transformée de Fourier. Il est en outre configuré pour enregistrer des données issues de la transformée de Fourier sous formes de données représentatives de la forme spectrale du second signal optique OSIG2 délivré par le micro-résonateur ONRES. De façon similaire au module d'acquisition et d'enregistrement SREC, le module d'analyse spectrale SPECTAN comprend un ensemble d'éléments classiquement utilisés pour la mise en œuvre d'un traitement numérique du signal, à savoir un ou plusieurs microcontrôleurs, des mémoires non-volatiles pour stocker du code exécutable par le ou les microcontrôleurs, un ou plusieurs modules de mémoire vive utiles au stockage de paramètres fonctionnels et des données représentatives du second signal optique numérisé, des circuits d'alimentation en énergie, un ou plusieurs circuits de remise à zéro, un ou plusieurs circuits d'horloge, cette liste étant, là encore, non-exhaustive.

L'unité de contrôle du module SPECTAN est configurée pour opérer, sous contrôle d'un logiciel embarqué où précédemment téléchargé, une détection de pics de pureté, représentatifs de composantes de couleurs, créées par le micro-résonateur ONRES, et comprises dans le second signal optique OSIG2. Ces pics de puretés subissent des variations du fait de la combinaison du micro-résonateur et de la goute d'échantillon de mélange en suspension qu'il supporte, du fait de la sédimentation ou du crémage de l'échantillon de mélange de matière en suspension et de l'accumulation croissante de particules qui se déposent en couche au dessus de la cavité du micro-résonateur ONRES.

Finalement, à l'étape initiale **S0**, l'ensemble de la chaine de traitement du signal bâtie autour du micro-résonateur optique ONRES est configurée et prête pour une utilisation. Le premier signal optique OSIG1 (source laser) est cependant désactivé à ce stade.

A l'étape **S1**, un échantillon de matière sous la forme d'un mélange en suspension est positionné sur la cavité du micro-résonateur ONRES.

L'échantillon est par exemple, une goutte de sang comprenant du plasma sanguin et des globules en suspension dans ce plasma qui, après positionnement, et en l'absence de mouvements parasites de l'échantillon vont faire l'objet d'un phénomène de sédimentation (effet de la gravité). Le premier signal optique OSIG1 est activé après la mise en place de l'échantillon de mélange de matière en suspension, alors que l'ensemble du système est maintenu immobile. D'autres types d'échantillons peuvent être utilisés afin de mesurer puis déterminer une vitesse de sédimentation ou de crémage.

L'étape **S2** correspond à l'étape de capture d'une « image » du signal optique de référence OSIG1, vu à travers le micro-résonateur optique ONRES. A cette étape, le module d'acquisition et d'enregistrement SREC opère une acquisition du signal optique OSIG2, délivré en sortie du micro-résonateur ONRES et capturé par un capteur de type CCD rapide à haute définition. Le capteur CCD opère, le cas échéant, une conversion analogique / numérique du signal ensuite enregistrée dans un module mémoire du module d'acquisition SREC, avant traitement ultérieur par le module d'analyse spectrale SPECTAN.

A l'étape **S3**, des données représentatives du signal OSIG2, luimême représentatif de la modification du premier signal optique de référence OSIG1 par le micro-résonateur ONRES, sous l'effet de la sédimentation ou du crémage de l'échantillon placé sur la cavité du micro-résonateur ONRES, sont stockées dans la mémoire du module SREC et sont ensuite transmises au module d'analyse spectrale SPECTAN. Selon une variante du mode de réalisation, le module SPECTAN est adapté pour réaliser des opérations de lecture directement dans la mémoire du module d'acquisition et d'enregistrement SREC. Le module SPECTAN opère des transformées de Fourier par fenêtres temporelles successives (par itérations) et enregistre dans sa mémoire des données représentatives de ces transformées, pour chacune des itérations de calcul. L'unité de contrôle met en œuvre une scrutation des données représentatives du second signal optique, dans le domaine spectral ainsi défini, et détecte des pics variant alors dynamiquement en position, en amplitude et en largeur, au cours du temps et au fil du processus de sédimentation ou de crémage.

Finalement, une analyse de la variation des pics dits « pics de pureté » en amplitude, position spectrale et/ou finesse, permet de définir progressivement, et en opérant de façon itérative à une fréquence typique de l'ordre de la seconde (approximativement), une vitesse de sédimentation ou de crémage du mélange en suspension positionné sur la cavité du micro-résonateur ONRES sous la forme d'au moins une information représentative de la vitesse de sédimentation ou respectivement de crémage (c'est-à-dire, dans ces deux cas, de croissance d'une couche de particules, ou d'éléments de type gouttelettes, s'agglomérant respectivement en direction du bas ou bien du haut). Selon un mode de réalisation préférée de l'invention, cette information est ensuite transmise à un module d'interface utilisateur qui opère un affichage sur un écran, sous forme de valeur numérique, d'un bar-graph, ou encore d'une information sonore, par exemple. Selon une variante, l'information représentation de la vitesse de sédimentation ou de crémage de l'échantillon peut être transmise à un système distant, via une interface filaire ou sans-fil. Avantageusement, l'utilisation astucieuse d'un micro-résonateur couplé à une chaine de traitement d'un signal optique permet de définir rapidement et en quelques minutes, une vitesse de sédimentation ou de crémage d'un mélange en suspension, tel que, à titre d'exemple, la vitesse de sédimentation d'un échantillon de sang, la vitesse de crémage de deux fluides en agroalimentaire.

La **figure 2** représente le système configuré pour mettre en œuvre la méthode, selon un mode particulier et non-limitatif de l'invention, comprenant les éléments précités que sont la source LIG de référence, délivrant le premier signal optique OSIG1 et connectée en entrée du micro-résonateur ONRES dont la sortie (du micro-résonateur) est connectée au module d'acquisition et d'enregistrement SREC, module d'acquisition et d'enregistrement du second signal optique OSIG2. Le second signal optique OSIG2 est représentatif de variations du signal OSIG1 opérées par le résonateur ONRES portant un échantillon de mélange en suspension en cours de sédimentation ou de crémage. Dans le cas de la sédimentation, la descente progressive de particules du mélange (par exemple des globules rouges) entraine une variation du peigne de composantes de couleurs du signal OSIG, créé dans le micro-résonateur ONRES, en intensité et en position, dans un domaine spectral. Dans le cas du crémage, c'est la remontée progressive de particules, ou d'éléments de type gouttelettes, du mélange qui entraine une variation du peigne de composantes de couleurs du signal OSIG. Le module d'analyse spectrale SPECTAN est configuré pour détecter ces variations après capture et enregistrement.

La **figure 3** représente le micro-résonateur photonique ONRES utilisé pour une mesure de vitesse de sédimentation ou de crémage mise en œuvre dans le système de la figure 2. Le micro-résonateur ONRES est de type à couplage latéral et est développé, par exemple, selon un procédé lithographique, dans un polymère de type UV210, en utilisant un rayonnement UV pour définir des motifs submicrométriques.

L'invention ne se limite pas aux seuls modes de réalisation décrits ci-avant et concerne toute mesure de la vitesse de sédimentation ou de crémage d'un mélange en suspension selon la revendication 1.

## Revendications

1. Méthode de détermination d'une vitesse de sédimentation ou de crémage d'un mélange en suspension, ladite méthode étant **caractérisée en ce qu'**elle comprend :
- une application (S1) d'un échantillon dudit mélange en suspension sur un micro-résonateur photonique (ONRES),
- une application (S1) d'un premier signal optique (OSIG1) en entrée dudit micro-résonateur photonique (ONRES) portant ledit échantillon dudit mélange en suspension,
- une acquisition et un enregistrement (S2) d'un second signal optique (OSIG2), délivré en sortie dudit micro-résonateur (ONRES) portant ledit échantillon dudit mélange en suspension, et,
- une détermination (S3) d'une information représentative d'une vitesse de sédimentation ou de crémage dudit mélange en suspension à partir dudit second signal enregistré (OSIG2), par itérations successives d'analyse spectrale dudit second signal optique (OSIG2).

2. Méthode selon la revendication 1, **caractérisé en ce que** lesdites itérations successives d'analyse spectrale ont chacune une durée comprise entre 0,5 seconde et 2 secondes.

3. Système de détermination d'une vitesse de sédimentation ou de crémage d'un mélange en suspension **caractérisé en ce qu'**il comprend :
- un micro-résonateur photonique (ONRES) configuré pour recevoir un échantillon d'un liquide en suspension,
- un émetteur d'un premier signal optique (OSIG1) configuré pour émettre en entrée dudit micro-résonateur photonique (ONRES),
- un module (SREC) d'acquisition et d'enregistrement d'un second signal optique (OSIG2), délivré en sortie dudit micro-résonateur portant ledit échantillon dudit mélange en suspension, et,
- un module de détermination (SPECTAN) d'une information représentative d'une vitesse de sédimentation ou de crémage dudit mélange en suspension à partir dudit second signal optique (OSIG2) enregistré, par itérations successives d'analyse spectrale dudit second signal optique (OSIG2).

4. Système de détermination d'une vitesse de sédimentation ou de crémage d'un mélange en suspension selon la revendication 3 **caractérisé en ce que** ledit premier signal optique (OSIG1), émis par une source (LID) comprend une pluralité de composantes spectrales.

## Patentansprüche

1. Verfahren zur Bestimmung einer Sedimentations- oder Flotationsgeschwindigkeit eines Gemischs in Suspension, wobei das Verfahren **dadurch gekennzeichnet ist, dass** es Folgendes umfasst:
- ein Auftragen (S1) einer Probe des Gemischs in Suspension auf einen photonischen Mikroresonator (ONRES),
- ein Anlegen (S1) eines ersten optischen Signals (OSIG1) am Eingang des photonischen Mikroresonators (ONRES), der die Probe des Gemischs in Suspension trägt,
- ein Erfassen und Registrieren (S2) eines zweiten optischen Signals (OSIG2), das am Ausgang des Mikroresonators (ONRES) ausgegeben wird, der die Probe des Gemischs in Suspension trägt, und
- ein Bestimmen (S3) einer Information, die für eine Sedimentations- oder Flotationsgeschwindigkeit des Gemischs in Suspension repräsentativ ist, anhand des zweiten registrierten Signals (OSIG2) durch aufeinanderfolgende Iterationen einer Spektralanalyse des zweiten optischen Signals (OSIG2).

2. Verfahren nach Anspruch 1, **dadurch gekennzeichnet, dass** die aufeinanderfolgenden Spektralanalyse-Iterationen jeweils eine Dauer zwischen 0,5 und 2 Sekunden aufweisen.

3. System zur Bestimmung einer Sedimentations- oder Flotationsgeschwindigkeit eines Gemischs in Suspension, **dadurch gekennzeichnet, dass** es Folgendes umfasst:
- einen photonischen Mikroresonator (ONRES), der dazu ausgebildet ist, eine Probe einer Flüssigkeit in Suspension aufzunehmen,
- einen Sender eines ersten optischen Signals (OSIG1), der dazu ausgebildet ist, am Eingang des photonischen Mikroresonators (ONRES) zu senden,
- ein Modul (SREC) zur Erfassung und Registrierung eines zweiten optischen Signals (OSIG2), das am Ausgang des Mikroresonators ausgegeben wird, der die Probe des Gemischs in Suspension trägt, und
- ein Modul zur Bestimmung (SPECTAN) einer Information, die für eine Sedimentations- oder Flotationsgeschwindigkeit des Gemischs in Suspension repräsentativ ist, anhand des zweiten registrierten optischen Signals (OSIG2) durch aufeinanderfolgende Iterationen einer Spektralanalyse des zweiten optischen Signals (OSIG2).

4. System zur Bestimmung einer Sedimentations- oder Flotationsgeschwindigkeit eines Gemischs in Suspension nach Anspruch 3, **dadurch gekennzeichnet, dass** das erste optische Signal (OSIG1), das von einer Quelle (LID) gesendet wird, eine Mehrzahl von Spektralkomponenten umfasst.

## Claims

1. Method for determining a rate of sedimentation or of creaming of a mixture in suspension, said method being **characterised in that** it comprises:
- an application (S1) of a sample of said mixture in suspension to a photonic microresonator (ONRES),
- an application (S1) of a first optical signal (OSIG1) at the input of said photonic microresonator (ONRES) carrying said sample of said mixture in suspension,
- an acquisition and a recording (S2) of a second optical signal (OSIG2), delivered at the output of said microresonator (ONRES) carrying said sample of said mixture in suspension, and
- a determination (S3) of information representing a rate of sedimentation or of creaming of said mixture in suspension from said second recorded signal (OSIG2), by successive iterations of spectral analysis of said second optical signal (OSIG2).

2. Method according to claim 1, **characterised in that** said successive iterations of spectral analysis each have a duration of between 0.5 seconds and 2 seconds.

3. System for determining a rate of sedimentation or of creaming of a mixture in suspension, **characterised in that** it comprises:
- a photonic microresonator (ONRES) configured to receive a sample of a liquid in suspension,
- an emitter of a first optical signal (OSIG1) configured to emit at the input of said photonic microresonator (ONRES),
- a module (SREC) for acquiring and recording a second optical signal (OSIG2), delivered at the output of said microresonator carrying said sample of said mixture in suspension, and
- a module (SPECTAN) for determining information representing a rate of sedimentation or of creaming of said mixture in suspension from said recorded second optical signal (OSIG2), by successive iterations of spectral analysis of said second optical signal (OSIG2).

4. System for determining a rate of sedimentation or of creaming of a mixture in suspension according to claim 3, **characterised in that** said first optical signal (OSIG1), emitted by a source (LID), comprises a plurality of spectral components.
